# FASCICULE DE BREVET EUROPEEN

(11) **EP 3 077 210 B1**
(45) Date de publication et mention de la délivrance du brevet: **04.10.2017**
(21) Numéro de dépôt: 14821766.4
(22) Date de dépôt: 01.12.2014
(51) Int. Cl.: B41M 1/04, B41M 3/00, B41M 7/00

(54) **PROCÉDÉ DE DÉCORATION PAR FLEXOGRAPHIE D'UN ARTICLE COMPRENANT UN REVÊTEMENT THERMOSTABLE**
VERFAHREN ZUM DEKORIEREN EINES GEGENSTANDS MITTELS FLEXODRUCKS, DER EINE WÄRMEBESTÄNDIGE BESCHICHTUNG ENTHÄLT
PROCESS FOR DECORATING AN ARTICLE BY FLEXOGRAPHY, SAID ARTICLE COMPRISING A HEAT-RESISTANT COATING

(30) Priorité: 03.12.2013 FR 1362044
(43) Date de publication de la demande: 12.10.2016
(73) Titulaire: SEB S.A., 69130 Ecully (FR)
(72) Inventeur: LE BRIS, Stéphanie, F-73000 Chambéry (FR); CAILLIER, Laurent, F-74370 PRINGY (FR)
(74) Mandataire: Rivière, Sophie
(86) Numéro de dépôt international: PCT/FR2014/053104
(87) Numéro de publication internationale: WO 2015/082820

(56) Documents cités:
- JP-A- H1 176 934
- JP-A- H1 177 895
- JP-A- H10 264 295
- JP-A- H10 264 296

## Description

La présente invention concerne de manière générale un procédé de décoration d'un article, notamment un article culinaire.

Plus particulièrement, la présente invention concerne un procédé de décoration, dans lequel un décor utilisant des encres (ou compositions) particulaires thermostables est appliqué par flexographie sur un revêtement antiadhésif à base de résine fluorocarbonée, le décor pouvant être constitué de motifs hyperréalistes colorés.

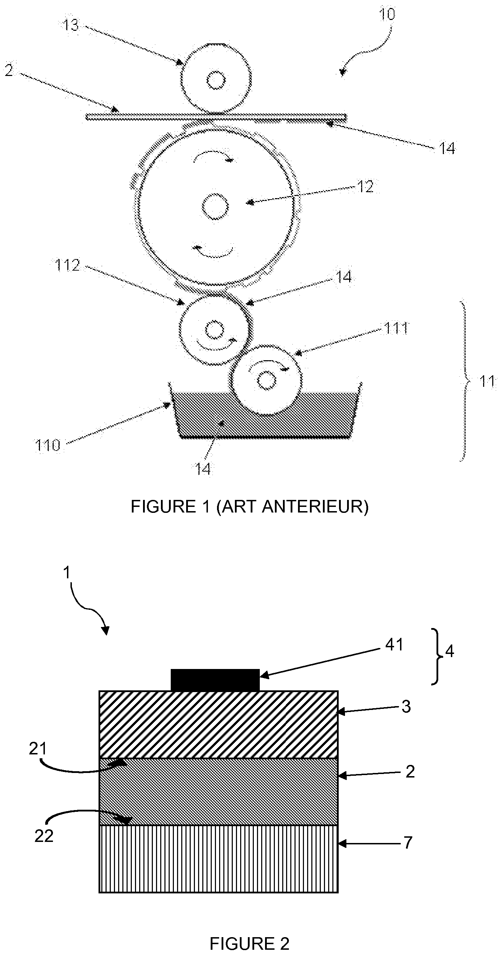

Le procédé flexographique est un procédé connu d'impression en relief, à transfert direct, qui permet notamment d'imprimer des motifs hyperréalistes colorés. Il est apparu vers 1860 aux États-Unis puis en Angleterre, et en France en 1905 en Alsace. Il s'agissait d'un procédé de marquage à l'aniline, qui s'est appelé flexographie en 1952. Ce procédé met en oeuvre un dispositif que l'on nomme généralement groupe d'impression flexographique 10, qui est illustré sur la figure 1. Le groupe d'impression flexographique 10 de la figure 1 est constitué d'une unité d'encrage 11, d'un cylindre (ou rouleau) porte-clichés 12 et d'un cylindre (ou rouleau) de contre-pression 13. L'unité d'encrage 11 permet de contrôler et de régulariser l'apport d'encre sur le cliché. Elle est généralement constituée d'un encrier 110, d'un cylindre (ou rouleau) barboteur 111, d'un cylindre (ou rouleau) encreur 112 tramé appelé anilox et d'une racle (non représentée sur la figure 1). Le principe de fonctionnement du groupe d'impression flexographique 10 est le suivant :
- l'encre 14 est transférée de l'encrier 110 au cylindre anilox 112 par l'intermédiaire du rouleau barboteur 111 ;
- le cylindre anilox 112 encre le rouleau porte-clichés 12, qui transfère l'encre sur le support 2 à imprimer grâce à une légère pression appliquée par le cylindre de contre-pression 13.

Ce procédé d'impression est principalement utilisé dans le domaine de l'emballage, et notamment de l'emballage en carton. Il est également connu d'utiliser la flexographie pour la décoration d'articles culinaires revêtus de laque, comme c'est par exemple le cas pour les articles culinaires commercialisés par la société Tramontina. Toutefois, ces articles présentent un manque de durabilité à l'usage dû particulièrement à la mauvaise tenue thermique des laques et des encres utilisées dans le décor. Il s'agit en effet de revêtements basés sur un liant silicone polyester et des pigments organiques.

Le document brevet JPH 10 264295 décrit un procédé pour rendre une feuille d'acier non-adhésive et résistante à la chaleur. Le procédé de ce document comprend la fourniture d'un support, l'application d'une peinture colorée non-adhésive comprenant un mélange d'une résine thermorésistante et de fluororésine, une première cuisson de l'ensemble, la formation d'une couche d'impression non adhésive par flexographie, la cuisson finale de l'ensemble. Ce procédé comprend donc une double-cuisson qui présente les inconvénients suivants:
- une mauvaise qualité d'impression est obtenue. En effet, la première cuisson à une température de l'ordre de 400°C entraine un frittage de la résine fluorée de la première couche et donc la formation d'un revêtement très anti-adhérent. Cette surface est complètement hydrophobe et très glissante, il n'est donc pas possible d'imprimer un décor de bonne qualité dessus, qui plus est par flexographie qui est une technique par contact.
- la deuxième couche imprimée a de faibles interactions avec la première couche déjà cuite et le risque de clivage du revêtement final est très important.
- une double cuisson demande du temps et entraine une importante consommation énergétique ; elle est donc onéreuse.

Pour remédier à l'ensemble de ces inconvénients, la demanderesse a mis au point un procédé de décoration d'un article, permettant l'impression par flexographie de compositions (ou encres) de décor pigmentées particulaires à bonne tenue thermique, de préférence de nature inorganique, sur un revêtement thermostable à base de résine fluorocarbonée connue pour sa résistance chimique et mécanique à haute température.

Par composition (ou encre) particulaire, on entend au sens de l'invention une composition se présentant sous forme d'un solide discret ou de particules en suspension ou en dispersion dans un liquide, et comportant l'un au moins d'un liant, d'une charge ou d'un pigment organiques ou inorganiques.

La dimension des particules, caractérisée par le d50, est typiquement comprise entre 20 nm et 5 µm.

Il est connu de l'homme de l'art que les articles présentant des propriétés d'anti-adhérence sont très généralement composés d'un revêtement à base de polymère fluoré. En particulier, il est connu que les articles culinaires munis d'un revêtement à base de polytétrafluoroéthylène (PTFE) permettent une cuisson ne nécessitant pas l'ajout de matière grasse pour la cuisson des aliments, tout en permettant un nettoyage très facile de l'article. Il est d'ailleurs largement reconnu que les résines fluorocarbonées, et plus particulièrement le polytétrafluoroéthylène (PTFE), sont les composés les plus appropriés pour obtenir un revêtement présentant des propriétés d'anti-adhérence exceptionnelles. Les techniques classiques de décoration de ces revêtements, telles que la tampographie ou la sérigraphie, ne permettent pas d'obtenir des décors hyperréalistes du fait d'une définition trop limitée.

La présente invention vise donc à proposer un procédé pour fabriquer un article, notamment culinaire, muni d'un revêtement thermostable antiadhésif et décoré de motifs colorés pouvant être hyperréalistes, et qui présente une longévité améliorée à l'usage (résistance chimique et mécanique à haute température, c'est-à-dire supérieure à 200°C).

Plus particulièrement, la présente invention a pour objet un procédé de décoration d'un article comprenant les étapes suivantes :
a) fourniture d'un support comprenant deux faces opposées ;
b) application d'une composition particulaire de revêtement thermostable sur l'une des faces du support pour former une sous-couche particulaire, la composition particulaire comportant au moins une résine fluorocarbonée, seule ou avec une résine d'accrochage thermostable ;
c) séchage naturel ou forcé de la sous-couche particulaire ;
d) impression par flexographie d'un décor sur ladite sous-couche particulaire, comprenant l'impression d1) d'une première composition de décor pigmentée sur ladite sous-couche particulaire pour former une première couche de décor discontinue, ladite première composition de décor comportant au moins un pigment à bonne tenue thermique ; puis
e) traitement thermique de solidification du support revêtu ;
dans lequel :
α. la première composition de décor pigmentée comporte en outre une résine fluorocarbonée dont la température de fusion ou de réticulation est égale ou inférieure à celle de la résine fluorocarbonée contenue dans la sous-couche particulaire, et/ou
β. une étape d'application d'une composition de finition incolore pour former une couche de finition incolore est réalisée entre l'étape d'impression par flexographie d) et l'étape e) de traitement thermique, la composition de finition incolore comportant au moins une résine fluorocarbonée, et/ou
γ. la sous-couche particulaire est une sous-couche à forte absorption.

Le procédé selon l'invention permet d'atteindre l'objectif visé par la présente invention grâce notamment à l'utilisation couplée d'encre(s) résistante(s) aux températures élevées et d'une sous-couche particulaire thermostable à base de résine fluorocarbonée, qui permet d'obtenir une bonne adhérence optimale entre la sous-couche et la ou les couches de décor imprimées par flexographie.

En outre, le procédé de l'invention permet de résoudre les inconvénients liés à une double-cuisson par l'utilisation d'un procédé monocuisson comprenant une étape de séchage et une cuisson finale. En effet, la sous-couche n'étant que séchée, la résine fluorocarbonée n'est pas frittée lors de l'application du décor ; la sous-couche présente donc une bonne qualité d'imprimabilité. En outre, une monocuisson permet une très bonne compatibilité de la sous-couche et du décor et est en outre très avantageuse en termes de temps et de consommation d'énergie.

Pour permettre l'ancrage des compositions (ou encres) particulaires imprimées par flexographie sur la sous-couche particulaire tout en conservant pour le décor ainsi formé de bonnes propriétés antiadhésives, le procédé selon l'invention nécessite la réalisation de l'une au moins des trois caractéristiques alternatives précitées (α à γ).

Les différentes étapes du procédé selon l'invention, ainsi que leurs variantes de réalisation préférentielles, vont être décrites ci-après.

En ce qui concerne la première étape a) de fourniture d'un support, le support peut être de nature quelconque pour autant qu'il puisse résister aux températures exigées pour la solidification des résines fluorocarbonées.

Si le support ne présente pas la forme finale désirée pour l'article et se présente sous forme d'une préforme telle qu'un disque, le procédé selon l'invention comprendra avantageusement une étape f) de mise en forme de la préforme jusqu'à obtenir la forme de l'article souhaitée.

Cette étape f) de mise en forme peut être réalisée postérieurement à l'étape e) de traitement thermique. Elle peut également être réalisée avant l'étape d'application b), l'impression par flexographie de l'étape d) n'étant alors réalisée que sur la partie plane de la face du support destinée à être munie du décor.

L'article qui est décoré selon le procédé selon l'invention peut être un article culinaire, et notamment un article culinaire comprenant un support métallique présentant une face intérieure pouvant recevoir des aliments et une face extérieure destinée à être disposée vers la source de chaleur.

Dans le cas d'un article culinaire, le support peut avantageusement être :
- une structure monocouche en aluminium anodisé ou non, ou en aluminium poli, brossé ou microbillé, sablé, traité chimiquement, ou en fonte d'aluminium, ou en acier inoxydable poli, brossé ou microbillé, ou en fonte, ou en cuivre martelé ou poli ; ou
- une structure multicouche, en partie ou en totalité, comprenant de l'extérieur vers l'intérieur les couches suivantes acier inoxydable/aluminium/acier inoxydable ou encore acier inoxydable/aluminium/cuivre/aluminium/acier inoxydable, ou encore une calotte d'aluminium de fonderie, d'aluminium ou d'alliages d'aluminium doublée d'un fond extérieur en acier inoxydable.

La face du support destinée à être munie du décor peut faire l'objet d'une étape a') de traitement de surface, de façon à augmenter sa surface spécifique.

Pour un support en aluminium, ce traitement de surface peut avantageusement consister en une anodisation (création d'une structure tubulaire d'alumine), ou une attaque chimique, ou encore un sablage, microbillage, brossage, ou émerisage...

Les autres supports métalliques peuvent notamment être polis, sablés, brossés, ou microbillés...

Le procédé selon l'invention comporte, à la suite de l'étape a) de fourniture du support (et le cas échéant de sa mise en forme et/ou de son traitement de surface éventuels), une étape d'application d'au moins une composition particulaire de revêtement thermostable sur la face du support destinée à être munie du décor, conduisant à la formation d'une sous-couche particulaire de revêtement thermostable.

Par sous-couche particulaire, on entend au sens de l'invention une sous-couche obtenue après séchage naturel ou forcé d'une composition particulaire.

Par composition de décor pigmentée à bonne tenue thermique, on entend, au sens de la présente invention, une composition comportant un pigment à bonne tenue thermique.

Par pigment à bonne tenue thermique, on entend un pigment dont l'évolution de couleur delta E, mesurée à température ambiante, est inférieure à 1 après un traitement thermique de 10 minutes à 410°C ± 30°C.

Par charge à bonne tenue thermique, on entend une charge dont l'évolution en masse, après un traitement thermique de 10 minutes à 410°C ± 30°C, n'excède pas 5%.

La composition particulaire de revêtement thermostable peut être appliquée de manière classique par pulvérisation, au rideau, par sérigraphie, au rouleau, par tampographie, par impression jet d'encre, etc...

La composition particulaire comporte au moins une résine fluorocarbonée, seule ou avec une résine d'accrochage thermostable.

La composition particulaire peut comprendre en outre l'un au moins d'une charge à bonne tenue thermique et d'un pigment à bonne tenue thermique.

A titre de résine fluorocarbonée utilisable dans la composition particulaire selon l'invention, on peut notamment citer le polytétrafluoroéthylène (PTFE), le copolymère de tétrafluoroéthylène et de perfluoro-propylvinyléther (PFA), le copolymère de tétrafluoroéthylène et d'hexafluoropropylène (FEP) et leurs mélanges.

A titre de résine d'accrochage thermostable utilisable dans la composition particulaire de revêtement thermostable selon l'invention, on peut notamment citer les polyamides imides (PAI), les polyéthers imides (PEI), les polyimides (PI), les polyéthercétones (PEK), les polyétheréthercétones (PEEK), les polyéthersulfures (PES), les sulfures de polyphénylène (PPS) et leurs mélanges.

A titre de pigments à bonne tenue thermique utilisables dans la composition particulaire de revêtement thermostable selon l'invention, on peut notamment citer les pigments minéraux tels que le dioxyde de titane, les spinelles, les oxydes de fer, le titanate de nickel, le noir de carbone, les paillettes de mica, les paillettes métalliques (telles que des paillettes d'aluminium) ou les pigments organiques tels que les rouges de pérylène. Les pigments de cette composition particulaire sont choisis de préférence pour obtenir une couleur claire.

A titre de charges à bonne tenue thermique on utilisera notamment des charges de couleur claire telles que la silice, le talc, le kaolin, la baryte et la wollastonite.

La sous-couche particulaire ainsi formée doit être sèche avant l'impression par flexographie de la première couche de décor, ce séchage pouvant être naturel ou forcé par exemple par rayonnement infrarouge ou convection d'air chaud.

La mouillabilité de la sous-couche particulaire séchée peut par ailleurs être améliorée par utilisation d'un traitement plasma froid ou corona qui favorise l'étalement de la couche de décor pigmentée sur la sous-couche.

Puis, on imprime par flexographie un décor sur la sous-couche particulaire. Cette étape comprend l'impression d'une première composition de décor pigmentée (ou première encre), pour former une première couche de décor, qui est discontinue.

De manière avantageuse, l'étape d) d'impression du décor peut en outre comprendre :
d2) séchage naturel ou forcé de la première couche de décor ; puis
d3) impression par flexographie d'une deuxième composition pigmentée de décor comportant un deuxième pigment à bonne tenue thermique (pouvant être identique ou différent de celui de la première couche de décor) pour former une deuxième couche de décor discontinue, ladite deuxième couche de décor étant disposée en superposition et/ou en juxtaposition de la première couche pigmentée.

Le décor comporte dans ce cas deux couches de décor pigmentées.

Le décor peut également comporter plus de deux couches de décor. L'étape d) d'impression du décor comprend alors en outre les étapes suivantes :
d4) séchage naturel ou forcé de la (i-1)^{ème} couche de décor appliquée sur le support ; puis
d3) impression par flexographie d'une i^{ème} composition pigmentée de décor comportant un i^{ème} pigment à bonne tenue thermique (pouvant être identique ou différent de celui des autres couches de décor appliquées préalablement) pour former une i^{ème} couche de décor discontinue, ladite i^{ème} couche de décor étant disposée en superposition et/ou en juxtaposition des autres couches de décor appliquées préalablement,

ces étapes étant répétées autant de fois que nécessaire pour réaliser le décor souhaité (par exemple, pour assurer le nombre de teintes voulues).

Si le décor comporte quatre couches de décor de couleurs différentes, le décor est dit quadrichrome. Si le décor en comporte six, il est dit hexachrome. La combinaison de toutes ces couches de couleurs permet d'atteindre une grande variété de teintes.

Si la ou les couches de décor ne sont pas discontinues et forment donc un aplat total recouvrant complètement la sous-couche particulaire, il n'y a alors pas de décor. En effet, un décor est obtenu par le contraste visible de couleur entre la ou les couches de décor et la sous-couche particulaire.

Les compositions de décor comportent chacune au moins un pigment à bonne tenue thermique, de préférence de nature minérale.

A titre de pigments utilisables dans les compositions de décor selon l'invention et présentant une bonne tenue thermique, on peut notamment citer les pigments minéraux tels que le dioxyde de titane, les spinelles, les oxydes de fer, le titanate de nickel, le noir de carbone, les paillettes de mica enrobées, les paillettes métalliques (telles que les paillettes d'aluminium) ou les pigments organiques tels que les rouges de pérylène.

Selon la caractéristique α du procédé selon l'invention, les compositions (ou encres) de décor comportent, outre le pigment à bonne tenue thermique, une résine fluorocarbonée dont la température de fusion ou de réticulation est égale ou inférieure à celle de la résine fluorocarbonée contenue dans la sous-couche particulaire.

A titre de résine fluorocarbonée utilisable dans les compositions de décor selon l'invention, on peut notamment citer le polytétrafluoroéthylène (PTFE), le copolymère de tétrafluoroéthylène et de perfluoro-propylvinyléther (PFA), le copolymère de tétrafluoroéthylène et d'hexafluoropropylène (FEP) et leurs mélanges.

De même nature chimique, les compositions (ou encres) de décor et la sous-couche particulaire ont alors une forte affinité mutuelle, garante d'une bonne cohésion après cuisson, le décor présentant en outre les propriétés antiadhésives caractéristiques des revêtements fluorocarbonés.

Selon la caractéristique β du procédé selon l'invention, le procédé comprend en outre, entre l'étape d) d'application du décor et l'étape e) de traitement thermique de solidification, une étape d'application d'une composition de finition incolore comportant au moins une résine fluorocarbonée sur le décor et, le cas échéant sur ladite sous-couche particulaire (lorsque le décor est discontinu), pour former une couche de finition incolore.

Cette couche de finition incolore sert à protéger le décor, et à le lier à la sous-couche particulaire, tout en contribuant à l'amélioration des propriétés antiadhésives du revêtement.

Cette couche de finition incolore peut être enduite classiquement par pulvérisation, au rideau, par sérigraphie, au rouleau, par tampographie, par impression jet d'encre, etc...

A titre de résines fluorocarbonées utilisables dans la composition de finition selon l'invention, on peut notamment citer le polytétrafluoroéthylène (PTFE), le copolymère de tétrafluoroéthylène et de perfluoro-propylvinyléther (PFA), le copolymère de tétrafluoroéthylène et d'hexafluoropropylène (FEP) et leurs mélanges.

Selon la caractéristique γ du procédé selon l'invention, on utilise une sous-couche particulaire à forte absorption.

Par sous-couche particulaire à forte absorption, on entend, au sens de la présente demande, une sous-couche poreuse ou contenant des charges intrinsèquement poreuses ou générant une porosité par leur association au moment du séchage, pour permettre l'absorption de couleur et/ou de phase liquide provenant des couches de décor.

La sous-couche à forte absorption présente un degré de vide d'au moins 10% par rapport au volume total du matériau.

A titre de charges intrinsèquement poreuses ou générant une porosité, on utilisera de préférence des particules de silice colloïdale ou d'alumine colloïdale, des particules de silice poreuse, ou encore des particules de zéolithe.

La solidification de la sous-couche particulaire et du décor humide est réalisée, dans le procédé de décoration selon l'invention, par un traitement thermique de solidification du support revêtu.

Par traitement thermique de solidification, on entend, au sens de la présente invention, l'application par tout moyen approprié d'un flux thermique destiné à éliminer dans les couches déposées ou imprimées les solvants et/ou matières volatiles, et à fondre et permettre la coalescence des résines contenues dans ces couches et également à réticuler ces résines sur elles-mêmes ou entre elles si nécessaire.

De manière avantageuse, le traitement thermique de solidification e) peut consister en une cuisson réalisée (par exemple, dans un four classique) à une température comprise entre 380°C et 430°C.

La face du support qui n'est pas décorée par flexographie peut également être enduite d'un revêtement antiadhésif à base de résine fluorocarbonée. L'ordre d'enduction des faces du support n'a pas d'importance.

Si la face opposée à celle destinée à être munie d'un décor est enduite d'un tel revêtement antiadhésif en second (c'est-à-dire après l'enduction de la sous-couche particulaire et du décor, le procédé selon l'invention comprend avant l'étape e) de traitement thermique de solidification :
- précuisson du support revêtu de la sous-couche particulaire et du décor, puis
- application d'un revêtement antiadhésif sur la face du support opposée à celle munie de la sous-couche particulaire et du décor.

Si la face opposée à celle destinée à être munie d'un décor est enduite d'un tel revêtement antiadhésif en premier (c'est-à-dire avant l'enduction de la sous-couche particulaire et du décor), le procédé selon l'invention comprend entre les étapes de fourniture a) (et le cas échéant de mise en forme et/ou de traitement de surface éventuels du support) et d'application b) :
- application d'un revêtement antiadhésif sur la face du support opposée à celle destinée à être munie de la sous-couche particulaire et du décor, puis
- précuisson du support revêtu du revêtement antiadhésif.

Le procédé selon l'invention présente les avantages suivants :
- il est possible de réaliser un décor antiadhésif pouvant comprendre des motifs très complexes et/ou hyperréalistes (par exemple, des photos, des textures, des imitations pierre, bois, marbre, tissus...) ;
- avec une définition largement supérieure à celle que l'on obtiendrait avec la sérigraphie ou la tampographie,
- tout en présentant des propriétés d'antiadhésivité et de stabilité thermique nettement renforcées, par rapport à celles des laques généralement utilisées comme support en flexographie ;
- il est possible de réaliser un décor avec des motifs très complexes à partir de quatre encres uniquement, ce qui présente un intérêt indéniable en termes de formulation et aussi de stockage ;
- avec une impression du décor par flexographie, la vitesse d'impression est compatible avec une cadence élevée de fabrication d'articles ;
- enfin, il est possible d'utiliser les groupes flexographiques déjà existants pour l'impression des laques dans le procédé selon l'invention sans modification majeure de cet appareillage.

D'autres avantages et particularités de la présente invention résulteront de la description qui va suivre, donnée à titre d'exemple non limitatif et faite en référence aux figures annexées et aux exemples correspondants :
- la figure 1 représente une vue schématique d'un groupe d'impression flexographique connu utilisé dans le domaine de l'emballage ;
- la figure 2 représente une vue schématique en coupe d'un article culinaire obtenu selon une première variante de réalisation du procédé de l'invention (cf. exemple 1 et exemple comparatif 1),
- la figure 3 représente une vue schématique en coupe d'un article culinaire obtenu selon une deuxième variante de réalisation du procédé de l'invention (cf. exemple 2),
- la figure 4 représente une vue schématique en coupe d'un article culinaire obtenu selon une troisième variante de réalisation du procédé de l'invention (cf. exemple 3),
- la figure 5 représente une vue schématique en coupe d'un article culinaire obtenu selon une quatrième variante de réalisation du procédé de l'invention (cf. exemple 4),
- la figure 6 représente une vue schématique en coupe d'un article culinaire obtenu selon une cinquième variante de réalisation du procédé de l'invention (cf. exemple 5),
- la figure 7 représente une vue schématique en coupe d'un article culinaire obtenu selon une sixième variante de réalisation du procédé de l'invention (cf. exemple 6),
- la figure 8 représente une vue schématique en coupe d'un article culinaire obtenu selon une septième variante de réalisation du procédé de l'invention (cf. exemple 7),
- la figure 9 représente une vue schématique en coupe d'un article culinaire obtenu selon une huitième variante de réalisation du procédé de l'invention (cf. exemple 8).

Les éléments identiques représentés sur les figures 2 à 9 sont identifiés par des références numériques identiques.

Les différentes variantes de réalisation illustrées sur les figures 2 à 9 sont commentées dans les exemples ci-après.

Dans ces exemples, sauf indication contraire, tous les pourcentages et parties sont exprimés en poids.

### EXEMPLES

### Dispositif de décoration par flexographie

On utilise, comme dispositif d'impression, le dispositif illustré sur la figure 1, habituellement destiné à l'impression de supports en carton.

### Supports

- Disques en aluminium de 31 cm de diamètre et d'épaisseur de 2,4 mm

### Encres et compositions particulaires

### Produits

- pigments inorganiques : pigments minéraux stables en température tels que le dioxyde de titane, les spinelles, les oxydes de fer et le titanate de nickel
- agent anti-mousse : produit commercialisé sous la dénomination commerciale Dehydran G par la société Cognis
- agent mouillant : produit de type alkylphénol éthoxylé commercialisé sous la dénomination commerciale Triton X100 par la société Dow ou équivalent
- solvant : propylène glycol
- résine acrylique épaississante commercialisée sous la dénomination commerciale SD15 par la société Synthomer
- dispersion PTFE à 60% d'extrait sec commercialisée sous la dénomination commerciale 5035Z par la société Dyneon
- dispersion de PFA à 50% d'extrait sec commercialisée sous la dénomination commerciale 6900GZ par la société Dyneon
- silice colloïdale : produit commercialisé par la société Clariant sous la dénomination commerciale Klebosol 47V50
- silice poreuse : produit commercialisé par la société AGC sous la dénomination commerciale Sunlovely

### Formulation

Les encres utilisées pour l'impression par flexographie dans le procédé de l'invention sont des formulations aqueuses adaptées à une impression par flexographie telle que connue de l'homme du métier. Ces formulations contiennent des pigments inorganiques permettant une bonne tenue en température des couleurs, de l'eau comme véhiculant principal avec au moins un co-solvant (propylène glycol). Ces formulations aqueuses sont préparées à partir d'une pâte pigmentaire, comme suit.

### 1/ Préparation d'une pâte pigmentaire

On prépare dans un premier temps une pâte pigmentaire (PP) de couleur donnée (y compris de couleur blanche). Il s'agit d'une dispersion dont la composition est indiquée ci-dessous dans le tableau 1 :

**Tableau 1 : composition de la pâte pigmentaire (PP)**

| **Produit** | **Quantité (% en poids)** |
|---|---|
| Pigment inorganique | 49,6 |
| Eau | 42 |
| Agent anti-mousse | 0,8 |
| Agent mouillant | 5 |
| NH₄OH | 0,6 |
| Solvant | 2 |
| TOTAL | 100 |

Cette dispersion est préparée dans un broyeur (par exemple un broyeur à billes) permettant de réduire la granulométrie des particules pigmentaires de manière à ce que leur d50 soit inférieure à 5 µm.

### 2/ Préparation d'une encre aqueuse fluorée (encre ou composition de décor pigmentée fluorée 1)

A partir de la pâte pigmentaire PP, on prépare une première composition ou encre de décor pigmentée 1, comme suit :
- 120 parties en poids de pâte pigmentaire PP,
- 22,5 parties en poids de solvant,
- 0,75 parties en poids d'agent anti-mousse,
- 1,5 parties en poids de NH₄OH,
- 1,88 parties en poids de résine acrylique épaississante, et
- 180 parties en poids de dispersion de PTFE

Cette formule présente des propriétés physiques (viscosité, vitesse de sèche) similaires à celles d'une encre traditionnelle utilisée en flexographie (viscosité 26 cp selon la norme AFNOR4, densité de 1,5 g/cm³).

### 3/ Préparation d'une encre aqueuse non fluorée (encre ou composition de décor pigmentée non fluorée 2)

A partir de la pâte pigmentaire PP, on prépare une deuxième composition ou encre de décor pigmentée non-fluorée 2), comme suit :
- 120 parties en poids de pâte pigmentaire PP,
- 22,5 parties en poids de solvant,
- 180 parties d'eau
- 0,75 parties en poids d'anti-mousse,
- 1,5 parties en poids de NH₄OH, et
- 1,88 parties en poids de résine acrylique épaississante.

Cette formule présente des propriétés physiques (viscosité, vitesse de sèche) similaires à celles d'une encre traditionnelle utilisée en flexographie (viscosité 26 cp selon la norme AFNOR 4, densité de 1,5 g/cm³).

### 4a/ Préparation d'une composition particulaire de sous-couche de revêtement thermostable pigmentée (SC1)

A partir d'une pâte pigmentaire PP blanche, telle que préparée au point 1 avec du dioxyde de titane en tant que pigment inorganique, on prépare une composition SC1 particulaire fluorée de sous-couche, comme indiqué dans le tableau 2 ci-dessous :

**Tableau 2 : composition de sous-couche blanche pour application sérigraphie (SC1)**

| **Produit** | **Quantité (% en poids)** |
|---|---|
| PP (TiO₂) | 20 |
| Dispersion PTFE | 50 |
| Silice colloïdale | 1 |
| Solvant | 10 |
| Eau | 15 |
| Agent anti-mousse | 1 |
| Résine acrylique épaississante | 2 |
| NH₄OH | 1 |
| TOTAL | 100 |

Cette formule présente des propriétés physiques (viscosité, vitesse de sèche) standard pour une application par sérigraphie (viscosité égale à 10 000 mPa.s à température ambiante).

### 4b/ Préparation d'une composition particulaire de sous-couche de revêtement thermostable à forte absorption (SC2)

A partir d'une pâte pigmentaire PP blanche, telle que préparée au point 1 avec du dioxyde de titane en tant que pigment inorganique, on prépare une composition SC2 particulaire fluorée de sous-couche à forte absorption, comme indiqué dans le tableau 3 ci-dessous :

**Tableau 3 : composition de sous-couche blanche à forte absorption pour application sérigraphie (SC2)**

| **Produit** | **Quantité (% en poids)** |
|---|---|
| PP (TiO₂) | 10 |
| Dispersion PTFE | 50 |
| Silice colloïdale | 1 |
| Silice poreuse | 10 |
| Solvant | 10 |
| Eau | 15 |
| Agent anti-mousse | 1 |
| Résine acrylique épaississante | 2 |
| NH₄OH | 1 |
| TOTAL | 100 |

Cette formule présente des propriétés physiques (viscosité, vitesse de sèche) standard pour une application par sérigraphie (viscosité égale à 10 000 mPa.s à température ambiante).

### 4c/ Préparation de compositions particulaires de sous-couche de revêtement thermostable incolore (SC3 et SC4)

On prépare des compositions SC3, SC4 particulaires fluorées de sous-couche incolore, comme indiqué dans les tableaux 4 (SC3) et 5 (SC4) ci-dessous :

**Tableau 4 : composition de sous-couche incolore pour application sérigraphie et roller (SC3)**

| **Produit** | **Quantité (% en poids)** |
|---|---|
| Dispersion PTFE | 75 |
| Solvant | 15 |
| Eau | 5 |
| Agent anti-mousse | 2 |
| Résine acrylique épaississante | 2 |
| NH₄OH | 1 |
| TOTAL | 100 |

Cette formule présente des propriétés physiques (viscosité, vitesse de sèche) standard pour une application par sérigraphie (viscosité égale à 10 000 mPa.s à température ambiante).

**Tableau 5 : composition de sous-couche incolore pour application par pulvérisation (SC4)**

| **Produit** | **Quantité (% en poids)** |
|---|---|
| Dispersion PTFE | 80 |
| Dispersion PFA | 5 |
| Agent acrylique d'étalement hydrosoluble | 0,5 |
| Tensioactif non chargé de type alkylphénoléthoxylate | 2 |
| Eau | 12,5 |
| TOTAL | 100 |

### 5/ Préparation de compositions de couche de finition incolore (CF1 et CF2)

On prépare des compositions CF1, CF2 particulaires fluorées de couche de finition incolore, comme indiqué dans les tableaux 6 (CF1) et 7 (CF2) ci-après :

**Tableau 6 : composition de couche de finition pour application sérigraphie et roller (CF1)**

| **Produit** | **Quantité (% en poids)** |
|---|---|
| Dispersion PTFE | 75 |
| Solvant | 15 |
| Eau | 5 |
| Agent anti-mousse | 2 |
| Résine acrylique épaississante | 2 |
| NH₄OH | 1 |
| TOTAL | 100 |

Cette formule présente des propriétés physiques (viscosité, vitesse de sèche) standard pour une application par sérigraphie (viscosité égale à 10 000 mPa.s à température ambiante).

**Tableau 7 : composition de couche de finition incolore pour application par pulvérisation (CF2)**

| **Produit** | **Quantité (% en poids)** |
|---|---|
| Dispersion PTFE | 80 |
| Dispersion PFA | 5 |
| Paillettes alumine mica | 1 |
| Agent acrylique d'étalement hydrosoluble | 0,5 |
| Tensioactif non chargé de type alkylphénoléthoxylate | 2 |
| Eau | 11,5 |
| TOTAL | 100 |

### Test : test de tenue et de transfert (cohésion)

Ce test fait appel à la norme NF D 21-511. Des quadrillages (dimensions 1 cm x 1 cm) de 100 carreaux sont tracés à l'aide d'une lame de rasoir sur le décor. L'application d'un ruban adhésif et son arrachement permettent :
1. d'évaluer la cohésion du décor par l'observation d'éventuels phénomènes de soulèvement, délamination ou clivage après l'arrachement de l'adhésif ;
2. en examinant la face adhérente de l'adhésif, après le test, de détecter un éventuel transfert de couleur du décor vers l'adhésif.

### EXEMPLE 1 :

### Impression d'une encre thermostable pigmentée fluorée (encre 1) sur une sous-couche pigmentée à base de PTFE

### Mode de réalisation a.

Le disque 2 ainsi revêtu et décoré correspond à celui illustré sur la figure 2.
i. Un disque 2 d'aluminium est préparé par traitement chimique afin de lui conférer de bonnes propriétés d'accroche ;
ii. on applique ensuite par sérigraphie sur l'une des faces 21 du disque 2 la composition particulaire pigmentée SC1 pour former une sous-couche particulaire pigmentée 3 humide ;
iii. la sous-couche particulaire 3 est séchée par radiation infrarouge ; puis
iv. l'encre pigmentée fluorée 1 est imprimée par flexographie sur la sous-couche particulaire 3 pour former une couche 41 de décor discontinue, formant le décor 4;
v. le disque 2 ainsi revêtu est précuit à une température de 350°C pendant 8 minutes ;
vi. on applique ensuite par sérigraphie (ou bien au rouleau, par impression jet d'encre, au rideau ou par pulvérisation) sur la face opposée 22 du disque 2 une composition de revêtement antiadhésif pour former une couche 7 de revêtement antiadhésif, qui peut être décorée ou non ;
vii. le disque 2 ainsi revêtu est cuit à une température de 430°C pendant 8 minutes ; et
viii. le disque 2 ainsi revêtu et cuit est mis en forme par emboutissage pour obtenir la forme souhaitée de l'article 1.

### Mode de réalisation b.

Le disque 2 ainsi revêtu et décoré correspond également à celui illustré sur la figure 2.
i. Un disque 2 d'aluminium est préparé par traitement chimique afin de lui conférer de bonnes propriétés d'accroche ;
ii. on applique ensuite par sérigraphie (ou bien au rouleau, par impression jet d'encre, au rideau ou par pulvérisation) sur l'une des faces 22 du disque 2 une composition de revêtement antiadhésif pour former une couche 7 de revêtement antiadhésif, qui peut être décorée ou non ;
iii. le disque 2 ainsi revêtu est précuit à une température de 350°C pendant 8 minutes ;
iv. on applique ensuite par sérigraphie sur la face opposée 21 du disque 2 la composition particulaire pigmentée SC1 pour former une sous-couche particulaire pigmentée 3 humide ;
v. la sous-couche particulaire 3 est séchée par radiation infrarouge ; puis
vi. l'encre pigmentée fluorée 1 est imprimée par flexographie sur la sous-couche particulaire 3 pour former une couche 41 de décor discontinue, formant le décor 4;
vii. le disque 2 ainsi revêtu est cuit à une température de 430°C pendant 8 minutes ; et
viii. le disque 2 ainsi revêtu et cuit est mis en forme par emboutissage pour obtenir la forme souhaitée de l'article 1.

Pour les deux modes de réalisation de cet exemple, la cohésion de la couche de décor fluorée avec la sous-couche particulaire fluorée a été évaluée à l'aide du test de tenue et de transfert décrit ci-dessus : on obtient 0 % d'arrachement et pas de transfert de couleur sur le ruban adhésif.

### EXEMPLE 2 :

### Impression d'une encre thermostable pigmentée fluorée (encre 1) sur une sous-couche incolore à base de PTFE

### Mode de réalisation a.

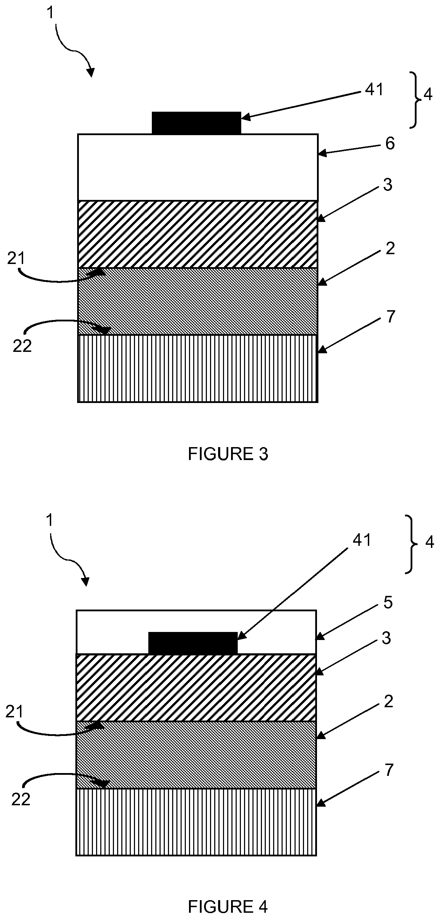

Le disque 2 ainsi revêtu et décoré correspond à celui illustré sur la figure 3.
i. Un disque 2 d'aluminium est préparé par traitement chimique afin de lui conférer de bonnes propriétés d'accroche ;
ii. on applique ensuite par sérigraphie sur l'une des faces 21 du disque 2 la composition particulaire pigmentée SC1 pour former une sous-couche particulaire pigmentée 3 humide ;
iii. la sous-couche particulaire 3 est séchée ; puis
iv. on applique par sérigraphie sur la sous-couche particulaire pigmentée 3 une composition de sous-couche incolore SC3 pour former une sous-couche incolore 6;
v. la sous-couche incolore 6 est séchée par radiation infrarouge ; puis
vi. l'encre pigmentée fluorée 1 est imprimée par flexographie sur la sous-couche incolore 6 pour former une couche 41 de décor discontinue, formant le décor 4 ;
vii. le disque 2 ainsi revêtu est précuit à une température de 350°C pendant 8 minutes ;
viii. on applique ensuite par sérigraphie (ou bien au rouleau, par impression jet d'encre, au rideau ou par pulvérisation) sur la face opposée 22 du disque 2 une composition de revêtement antiadhésif pour former une couche 7 de revêtement antiadhésif, qui peut être décorée ou non ;
ix. le disque 2 ainsi revêtu est cuit à une température de 430°C pendant 8 minutes ; et
x. le disque 2 ainsi revêtu et cuit est mis en forme par emboutissage pour obtenir la forme souhaitée de l'article 1.

### Mode de réalisation b.

Le disque 2 ainsi revêtu et décoré correspond également à celui illustré sur la figure 3.
i. Un disque 2 d'aluminium est préparé par traitement chimique afin de lui conférer de bonnes propriétés d'accroche ;
ii. on applique ensuite par sérigraphie (ou bien au rouleau, par impression jet d'encre, au rideau ou par pulvérisation) sur l'une des faces 22 du disque 2 une composition de revêtement antiadhésif pour former une couche 7 de revêtement antiadhésif, qui peut être décorée ou non ;
iii. le disque 2 ainsi revêtu est précuit à une température de 350°C pendant 8 minutes ;
iv. on applique ensuite par sérigraphie sur la face opposée 21 du disque 2 la composition particulaire pigmentée SC1 pour former une sous-couche particulaire 3 humide ;
v. la sous-couche particulaire 3 est ensuite séchée ; puis
vi. on applique par sérigraphie sur la sous-couche particulaire 3 la composition de sous-couche incolore SC3 pour former une sous-couche incolore 6 ;
vii. la sous-couche incolore 6 est séchée par radiation infrarouge ;
viii. l'encre pigmentée fluorée 1 est ensuite imprimée par flexographie sur la sous-couche incolore 6 pour former une couche 41 de décor discontinue, formant le décor 4 ;
ix. le disque 2 ainsi revêtu est cuit à une température de 430°C pendant 8 min ; et
x. le disque 2 ainsi revêtu et cuit est mis en forme par emboutissage.

Pour les deux modes de réalisation de cet exemple, la cohésion de la couche de décor fluorée sur la sous-couche fluorée incolore à base de PTFE a été évaluée à l'aide du test de tenue et de transfert décrit ci-dessus : on obtient 0 % d'arrachement et pas de transfert de couleur sur le ruban adhésif.

### EXEMPLE 3 :

### Impression d'une encre thermostable pigmentée non fluorée (encre 2) sur une sous-couche pigmentée à base de PTFE et protégée par une couche de finition incolore fluorée

### Mode de réalisation a.

Le disque 2 ainsi revêtu et décoré correspond à celui illustré sur la figure 4.
i. Un disque 2 d'aluminium est préparé par traitement chimique afin de lui conférer de bonnes propriétés d'accroche ;
ii. on applique ensuite par sérigraphie sur l'une des faces 21 du disque 2 la composition particulaire pigmentée SC1 pour former une sous-couche particulaire pigmentée 3 humide ;
iii. la sous-couche particulaire 3 est séchée par radiation infrarouge ; puis
iv. l'encre pigmentée non fluorée 2 est imprimée par flexographie sur la sous-couche particulaire 3 pour former une couche 41 de décor discontinue, formant le décor 4 ;
v. on applique ensuite par sérigraphie sur la couche 41 de décor la composition de couche de finition CF1 fluorée pour former une couche de finition 5 ;
vi. le disque 2 ainsi revêtu est précuit à une température de 350°C pendant 8 minutes ;
vii. on applique ensuite par sérigraphie (ou bien au rouleau, par impression jet d'encre, au rideau ou par pulvérisation) sur la face opposée 22 du disque 2 une composition de revêtement antiadhésif pour former une couche 7 de revêtement antiadhésif, qui peut être décorée ou non ;
viii. le disque 2 ainsi revêtu est cuit à une température de 430°C pendant 8 minutes ; et
ix. le disque 2 ainsi revêtu et cuit est mis en forme par emboutissage pour obtenir la forme souhaitée de l'article 1.

### Mode de réalisation b.

Le disque 2 ainsi revêtu et décoré correspond également à celui illustré sur la figure 4.
i. Un disque 2 d'aluminium est préparé par traitement chimique afin de lui conférer de bonnes propriétés d'accroche ;
ii. on applique ensuite par sérigraphie (ou bien au rouleau, par impression jet d'encre, au rideau ou par pulvérisation) sur l'une des faces 22 du disque 2 une composition de revêtement antiadhésif pour former une couche 7 de revêtement antiadhésif, qui peut être décorée ou non ;
iii. le disque 2 ainsi revêtu est précuit à une température de 350°C pendant 8 minutes ;
iv. on applique ensuite par sérigraphie sur la face opposée 21 du disque 2 la composition particulaire pigmentée SC1 pour former une sous-couche particulaire pigmentée 3 humide ;
v. la sous-couche particulaire 3 est séchée par radiation infrarouge ;
vi. l'encre pigmentée non fluorée 2 est imprimée par flexographie sur la sous-couche particulaire 3 pour former une couche 41 de décor discontinue, formant le décor 4 ;
vii. on applique ensuite par sérigraphie sur la couche 41 de décor la composition de couche de finition CF1 fluorée pour former la couche de finition 5 ;
viii. le disque 2 ainsi revêtu est cuit à une température de 430°C pendant 8 minutes ; et
ix. le disque 2 ainsi revêtu et cuit est mis en forme par emboutissage pour obtenir la forme souhaitée de l'article 1.

Pour les deux modes de réalisation de cet exemple, la cohésion de la couche de décor protégée par une couche de finition incolore fluorée sur la sous-couche particulaire fluorée a été évaluée à l'aide du test de tenue et de transfert décrit ci-dessus : on obtient 0 % d'arrachement et pas de transfert de couleur sur le ruban adhésif.

### EXEMPLE 4 :

### Impression d'une encre thermostable pigmentée non fluorée (encre 2) sur une sous-couche incolore à base de PTFE et protégée par une couche de finition incolore fluorée

### Mode de réalisation a.

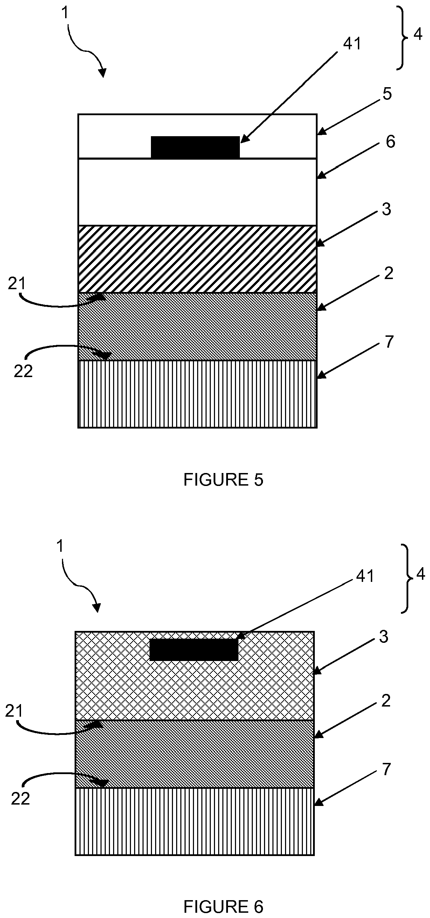

Le disque 2 ainsi revêtu et décoré correspond à celui illustré sur la figure 5.
i. Un disque 2 d'aluminium est préparé par traitement chimique afin de lui conférer de bonnes propriétés d'accroche ;
ii. on applique ensuite par sérigraphie sur l'une des faces 21 du disque 2 la composition de sous-couche particulaire pigmentée SC1 pour former une sous-couche particulaire pigmentée 3 humide ;
iii. la sous-couche particulaire 3 est séchée ; puis
iv. on applique par sérigraphie sur la sous-couche particulaire 3 la composition de sous-couche incolore SC3 pour former une sous-couche incolore 6 ;
v. l'encre pigmentée non fluorée 2 est imprimée par flexographie sur la sous-couche incolore 6 pour former une couche 41 de décor discontinue, formant le décor 4 ;
vi. on applique ensuite par sérigraphie sur la couche 41 de décor la composition de couche de finition CF1 pour former une couche de finition 5 ;
vii. le disque 2 ainsi revêtu est précuit à une température de 350°C pendant 8 minutes ;
viii. on applique ensuite par sérigraphie (ou bien au rouleau, par impression jet d'encre, au rideau ou par pulvérisation) sur la face opposée 22 du disque 2 une composition de revêtement antiadhésif pour former une couche 7 de revêtement antiadhésif, qui peut être décorée ou non ;
ix. le disque 2 ainsi revêtu est cuit à une température de 430°C pendant 8 minutes ; et
x. le disque 2 ainsi revêtu et cuit est mis en forme par emboutissage pour obtenir la forme souhaitée de l'article 1.

### Mode de réalisation b.

Le disque 2 ainsi revêtu et décoré correspond également à celui illustré sur la figure 5.
i. Un disque 2 d'aluminium est préparé par traitement chimique afin de lui conférer de bonnes propriétés d'accroche ;
ii. on applique ensuite par sérigraphie (ou bien au rouleau, par impression jet d'encre, au rideau ou par pulvérisation) sur l'une des faces 22 du disque 2 une composition de revêtement antiadhésif, à base de PTFE, pour former une couche 7 de revêtement antiadhésif, qui peut être décorée ou non ;
iii. le disque 2 ainsi revêtu est précuit à une température de 350°C pendant 8 minutes ;
iv. on applique ensuite par sérigraphie sur la face opposée 21 du support 2 la composition de sous-couche particulaire pigmentaire SC1 pour former une sous-couche particulaire pigmentée 3 humide ;
v. la sous-couche particulaire 3 est séchée ; puis
vi. on applique par sérigraphie sur la sous-couche particulaire 3 la composition de sous-couche incolore SC3 pour obtenir une sous-couche incolore 6
vii. la sous-couche incolore 6 est séchée ;
viii. l'encre pigmentée non fluorée 2 est imprimée par flexographie sur la sous-couche incolore 6 pour former une couche 41 de décor discontinue, formant le décor 4 ;
ix. on applique ensuite par sérigraphie sur la couche 41 de décor la composition de couche de finition CF1 fluorée pour former une couche de finition 5 ;
x. le disque 2 ainsi revêtu est cuit à une température de 430°C pendant 8 minutes ; et
xi. le disque 2 ainsi revêtu et cuit est mis en forme par emboutissage pour obtenir la forme souhaitée de l'article 1.

Pour les deux modes de réalisation de cet exemple, la cohésion de la couche de décor, protégée par une couche de finition incolore, sur une sous-couche incolore à base de PTFE a été évaluée à l'aide du test de tenue et de transfert décrit ci-dessus : on obtient 0 % d'arrachement et pas de transfert de couleur sur le ruban adhésif.

### EXEMPLE 5 :

### Impression d'une encre thermostable pigmentée non fluorée (encre 2) sur une sous-couche particulaire à forte absorption à base de PTFE

### Mode de réalisation a.

Le disque 2 ainsi revêtu et décoré correspond à celui illustré sur la figure 6.
i. Un disque 2 d'aluminium est préparé par traitement chimique afin de lui conférer de bonnes propriétés d'accroche ;
ii. on applique ensuite par sérigraphie sur l'une des faces 21 du disque 2 la composition particulaire pigmentée à forte absorption SC2 pour former une sous-couche particulaire pigmentée à forte absorption 3 humide ;
iii. la sous-couche particulaire 3 est séchée par radiation infrarouge ; puis
iv. l'encre pigmentée non fluorée 2 est imprimée par flexographie sur la sous-couche particulaire 3 pour former une couche 41 de décor discontinue, formant le décor 4 ;
v. le disque 2 ainsi revêtu est précuit à une température de 350°C pendant 8 minutes ;
vi. on applique ensuite par sérigraphie (ou bien au rouleau, par impression jet d'encre, au rideau ou par pulvérisation) sur la face opposée 22 du disque 2 une composition de revêtement antiadhésif pour former une couche 7 de revêtement antiadhésif, qui peut être décorée ou non ;
vii. le disque 2 ainsi revêtu est cuit à une température de 430°C pendant 8 minutes ; et
viii. le disque 2 ainsi revêtu et cuit est mis en forme par emboutissage pour obtenir la forme souhaitée de l'article 1.

### Mode de réalisation b.

Le disque 2 ainsi revêtu et décoré correspond également à celui illustré sur la figure 6.
i. Un disque 2 d'aluminium est préparé par traitement chimique afin de lui conférer de bonnes propriétés d'accroche ;
ii. on applique ensuite par sérigraphie (ou bien au rouleau, par impression jet d'encre, au rideau ou par pulvérisation) sur l'une des faces 22 du disque 2 une composition de revêtement antiadhésif pour former une couche 7 de revêtement antiadhésif, qui peut être décorée ou non ;
iii. le disque 2 ainsi revêtu est précuit à une température de 350°C pendant 8 minutes ;
iv. on applique ensuite par sérigraphie sur la face opposée 21 du disque 2 la composition particulaire pigmentée à forte absorption SC2 pour former une sous-couche particulaire pigmentée à forte absorption 3 humide ;
v. la sous-couche particulaire 3 est séchée par radiation infrarouge ; puis
vi. l'encre pigmentée non fluorée 2 est imprimée par flexographie sur la sous-couche particulaire 3 pour former une couche 41 de décor discontinue, formant le décor 4 ;
vii. le disque 2 ainsi revêtu est cuit à une température de 430°C pendant 8 minutes ; et
viii. le disque 2 ainsi revêtu et cuit est mis en forme par emboutissage pour obtenir la forme souhaitée de l'article 1.

Pour les deux modes de réalisation de cet exemple, la cohésion de la couche de décor sur une sous-couche particulaire à forte absorption a été évaluée à l'aide du test de tenue et de transfert décrit ci-dessus : on obtient 0 % d'arrachement et pas de transfert de couleur sur le ruban adhésif.

### EXEMPLE 6 :

### Impression d'une encre thermostable pigmentée non fluorée (encre 2) sur une sous-couche particulaire à forte absorption à base de PTFE

### Mode de réalisation a.

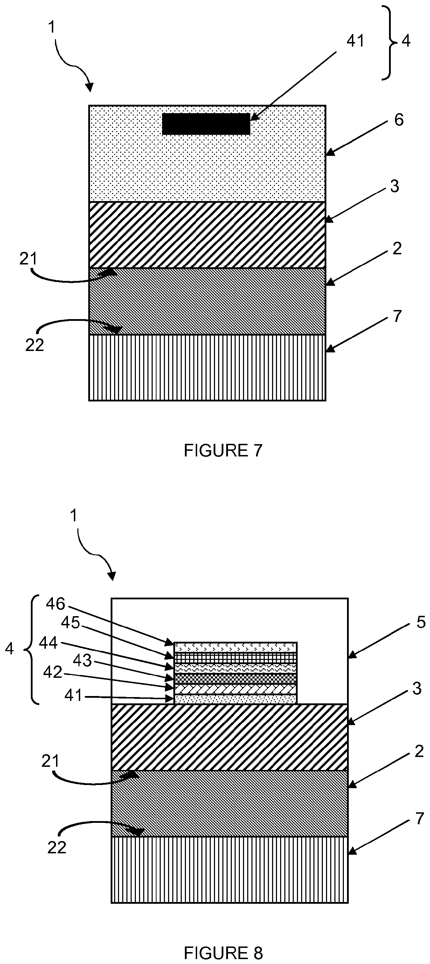

Le disque 2 ainsi revêtu et décoré correspond à celui illustré sur la figure 7.
i. Un disque 2 d'aluminium est préparé par traitement chimique afin de lui conférer de bonnes propriétés d'accroche ;
ii. on applique ensuite par sérigraphie sur l'une des faces 21 du disque 2 la composition particulaire pigmentée SC1 pour former une sous-couche particulaire pigmentée 3 humide ;
iii. la sous-couche particulaire 3 est séchée par radiation infrarouge ; puis
iv. on applique par sérigraphie sur la sous-couche particulaire 3 la composition particulaire pigmentée à forte absorption SC2 pour former une sous-couche particulaire pigmentée à forte absorption 6 humide ;
v. la sous-couche particulaire à forte absorption 6 est séchée par radiation infrarouge ; puis
vi. l'encre pigmentée non fluorée 2 est imprimée par flexographie sur la sous-couche à forte absorption 6 pour former une couche 41 de décor discontinue, formant le décor 4 ;
vii. le disque 2 ainsi revêtu est précuit à une température de 350°C pendant 8 minutes ;
viii. on applique ensuite par sérigraphie (ou bien au rouleau, par impression jet d'encre, au rideau ou par pulvérisation) sur la face opposée 22 du disque 2 une composition de revêtement antiadhésif pour former une couche 7 de revêtement antiadhésif, qui peut être décorée ou non ;
ix. le disque 2 ainsi revêtu est cuit à une température de 430°C pendant 8 minutes ; et
x. le disque 2 ainsi revêtu et cuit est mis en forme par emboutissage pour obtenir la forme souhaitée de l'article 1.

### Mode de réalisation b.

Le disque 2 ainsi revêtu et décoré correspond également à celui illustré sur la figure 7.
i. Un disque 2 d'aluminium est préparé par traitement chimique afin de lui conférer de bonnes propriétés d'accroche ;
ii. on applique ensuite par sérigraphie (ou bien au rouleau, par impression jet d'encre, au rideau ou par pulvérisation) sur l'une des faces 22 du disque 2 une composition de revêtement antiadhésif pour former une couche 7 de revêtement antiadhésif, qui peut être décorée ou non ;
iii. le disque 2 ainsi revêtu est précuit à une température de 350°C pendant 8 minutes ;
iv. on applique ensuite par sérigraphie sur la face opposée 21 du disque 2 la composition particulaire pigmentée SC1 pour former une sous-couche particulaire pigmentée 3 humide ;
v. la sous-couche particulaire 3 est séchée par radiation infrarouge ; puis
vi. on applique par sérigraphie sur la sous-couche particulaire 3 la composition particulaire pigmentée à forte absorption SC2 pour former une sous-couche particulaire pigmentée à forte absorption 6 humide ;
vii. la sous-couche particulaire à forte absorption 6 est séchée par radiation infrarouge ; puis
viii. l'encre pigmentée non fluorée 2 est imprimée par flexographie sur la sous-couche à forte absorption 6 pour former une couche 41 de décor discontinue, formant le décor 4 ;
ix. le disque 2 ainsi revêtu est cuit à une température de 430°C pendant 8 minutes ; et
x. le disque 2 ainsi revêtu et cuit est mis en forme par emboutissage pour obtenir la forme souhaitée de l'article 1.

Pour les deux modes de réalisation de cet exemple, la cohésion de la couche de décor sur une sous-couche particulaire à forte absorption a été évaluée à l'aide du test de tenue et de transfert décrit ci-dessus : on obtient 0 % d'arrachement et pas de transfert de couleur sur le ruban adhésif.

### EXEMPLE 7 :

### Impression en hexachromie sur le fond d'une pièce en forme de six encres thermostables pigmentées non fluorées sur une sous-couche particulaire non pigmentée et protégée par une couche de finition incolore fluorée

Le disque 2 ainsi revêtu et décoré correspond à celui illustré sur la figure 8.
i. Pour l'impression du décor, on réalise des encres de couleurs jaune, cyan, magenta, vert, orange et noir par utilisation de pigments différents respectifs dans une encre pigmentée non fluorée 2 ;
ii. un disque 2 d'aluminium, ayant deux faces 21, 22, est mis en forme par emboutissage pour obtenir la forme souhaitée de l'article 1 ;
iii. l'article 1 ainsi mis en forme est soumis à un traitement mécanique (grenaillage par billage à l'aide de billes en acier inoxydable) afin de lui conférer de bonnes propriétés d'accroche ;
iv. on applique ensuite par pulvérisation sur la face intérieure 22 de l'article 1 une composition de revêtement antiadhésif pour former une couche 7 de revêtement antiadhésif, qui peut être décorée ou non ;
v. La couche 7 de revêtement antiadhésif est séchée par radiation infrarouge ; puis
vi. on applique par pulvérisation sur la face extérieure 21 de l'article 1 (sur la jupe et le fond plat) la composition particulaire non pigmentée SC4 pour former une sous-couche particulaire 3 humide ;
vii. La sous-couche particulaire 3 est séchée par radiation infrarouge ;
viii. une première encre pigmentée non fluorée est imprimée par flexographie sur la partie plane de la sous-couche particulaire 3 pour former une première couche 41 de décor discontinue ;
ix. une deuxième encre pigmentée non fluorée est imprimée par flexographie sur la première couche 41 de décor, pour former une deuxième couche 42 de décor discontinue ;
x. une troisième encre pigmentée non fluorée est imprimée par flexographie sur la deuxième couche 42 de décor pour former une troisième couche 43 de décor discontinue ;
xi. une quatrième encre pigmentée non fluorée est imprimée par flexographie sur la troisième couche 43 de décor pour former une quatrième couche 44 de décor discontinue ;
xii. une cinquième encre pigmentée non fluorée est imprimée par flexographie sur la quatrième couche 44 de décor pour former une cinquième couche 45 de décor discontinue ;
xiii. une sixième encre pigmentée non fluorée est imprimée par flexographie sur la cinquième couche 45 de décor pour former une sixième couche 46 de décor discontinue, les six couches 41, 42, 43, 44, 45, 46 de décor formant le décor 4 ;
xiv. on applique ensuite par pulvérisation sur toute la face extérieure 21 de l'article 1 la composition de finition CF2 pour former une couche de finition 5 ; et
xv. l'article 1 ainsi revêtu sur ses deux faces 21, 22 est cuit à une température de 430°C pendant 8 minutes.

La cohésion des couches de décor non fluorées sur la sous-couche particulaire et sous la couche de finition fluorée a été évaluée à l'aide du test de tenue et de transfert décrit ci-dessus : on obtient 0 % d'arrachement et pas de transfert de couleur sur le ruban adhésif.

### EXEMPLE 8

### Impression en quadrichromie de quatre encres thermostables pigmentées fluorées sur une sous-couche particulaire non pigmentée

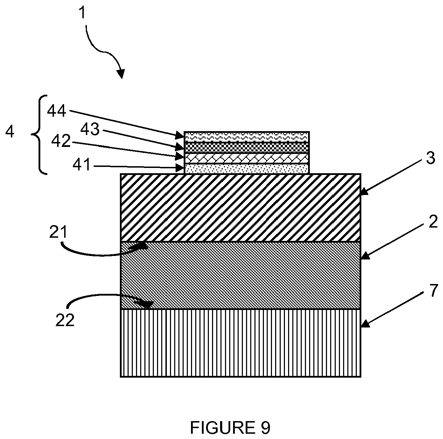

Le disque 2 ainsi revêtu et décoré correspond à celui illustré sur la figure 9.
i. Pour l'impression du décor, on réalise des encres de couleurs jaune, cyan, magenta et noir par utilisation de pigments différents respectifs dans une encre pigmentée fluorée 1 ;
ii. un disque 2 d'aluminium est préparé par traitement mécanique (brossage fin par rouleaux abrasifs) afin de lui conférer de bonnes propriétés d'accroche ;
iii. on applique au rouleau sur l'une des faces 21 du disque 2 la composition particulaire non pigmentée SC3 pour former une sous-couche particulaire pigmentée 3 humide ;
iv. la sous-couche particulaire 3 est séchée par radiation infrarouge ; puis
v. une première encre pigmentée fluorée est imprimée par flexographie sur la sous-couche particulaire 3 pour former une première couche 41 de décor discontinue ;
vi. une deuxième encre pigmentée fluorée est imprimée par flexographie sur la première couche 41 de décor pour former une deuxième couche 42 de décor discontinue ;
vii. une troisième encre pigmentée fluorée est imprimée par flexographie sur la deuxième couche 42 de décor pour former une troisième couche 43 de décor discontinue ;
viii. une quatrième encre pigmentée fluorée est imprimée par flexographie sur la troisième couche 43 de décor pour former une quatrième couche 44 de décor discontinue, les quatre couches 41, 42, 43, 44 de décor formant le décor 4 ;
ix. le disque 2 ainsi revêtu et décoré est précuit à une température de 350°C pendant 8 minutes ;
x. on applique ensuite au rouleau sur la face opposée 22 du disque 2 une composition de revêtement antiadhésif pour former une couche 7 de revêtement antiadhésif, qui peut être décorée ou non ;
xi. le disque 2 ainsi revêtu est cuit à une température de 430°C pendant 8 minutes ; et
xii. le disque 2 ainsi revêtu et cuit est mis en forme par emboutissage pour obtenir la forme souhaitée de l'article 1.

La cohésion des couches de décor fluorées sur la sous-couche particulaire a été évaluée à l'aide du test de tenue et de transfert décrit ci-dessus : on obtient 0 % d'arrachement et pas de transfert de couleur sur le ruban adhésif.

### EXEMPLE COMPARATIF 1 :

### Impression d'une encre thermostable pigmentée non fluorée (encre 2) sur une sous-couche particulaire à base de PTFE

Le disque 2 ainsi revêtu et décoré correspond à celui illustré sur la figure 2.
i. Un disque d'aluminium 2 est préparé par traitement chimique, afin de lui conférer de bonnes propriétés d'accroche ;
ii. on applique ensuite au rouleau sur l'une des faces 21 du disque 2 la composition particulaire pigmentée SC1 pour former une sous-couche particulaire pigmentée 3 humide ;
iii. la sous-couche particulaire 3 est séchée ; puis
iv. l'encre pigmentée non fluorée 2 est imprimée par flexographie sur la sous-couche particulaire 3 pour former une couche 41 de décor discontinue, formant le décor 4 ;
v. le disque 2 ainsi revêtu est précuit à 380°C pendant 5 minutes ;
vi. on applique ensuite au rouleau sur la face opposée 22 du disque 2 une composition de revêtement antiadhésif pour former une couche 7 de revêtement antiadhésif, qui peut être décorée ou non ;
vii. le disque 2 ainsi revêtu est cuit à une température de 430°C pendant plus de 5 minutes ;
viii. le disque 2 ainsi revêtu et cuit est mis en forme par emboutissage pour obtenir la forme souhaitée de l'article 1.

L'antiadhérence du décor est insuffisante. La cohésion des couches de décor sur la sous-couche particulaire a été évaluée à l'aide du test de transfert décrit ci-dessus : on obtient un important transfert de couleur sur le ruban adhésif.

## Revendications

1. Procédé de décoration d'un article (1) comprenant les étapes suivantes :
a) fourniture d'un support (2) comprenant deux faces opposées (21, 22) ;
b) application d'une composition particulaire de revêtement thermostable sur l'une (21) desdites faces du support (2) pour former une sous-couche particulaire (3), ladite composition particulaire comportant au moins une résine fluorocarbonée, seule ou avec une résine d'accrochage thermostable ;
c) séchage naturel ou forcé de ladite sous-couche particulaire (3) ;
d) impression par flexographie d'un décor (4) sur ladite sous-couche particulaire (3), comprenant l'impression d1) d'une première composition de décor pigmentée sur ladite sous-couche particulaire (3) pour former une première couche de décor (41) discontinue, ladite première composition de décor comportant au moins un pigment à bonne tenue thermique ; puis
e) traitement thermique de solidification du support (2) revêtu ;
dans lequel :
- la première composition de décor pigmentée comporte en outre une résine fluorocarbonée dont la température de fusion ou de réticulation est égale ou inférieure à celle de la résine fluorocarbonée contenue dans la sous-couche particulaire (3), et/ou
- une étape d'application d'une composition de finition incolore pour former une couche de finition (5) incolore est réalisée entre l'étape d'impression par flexographie d) et l'étape de traitement thermique e), ladite composition de finition incolore comportant au moins une résine fluorocarbonée, et/ou
- la sous-couche particulaire (3) est une sous-couche à forte absorption.

2. Procédé selon la revendication 1, dans lequel la composition particulaire comporte en outre l'un au moins d'une charge à bonne tenue thermique et d'un pigment à bonne tenue thermique.

3. Procédé selon l'une quelconque des revendications 1 et 2, comprenant en outre, préalablement à l'étape d'application b), une étape a') de traitement de surface de la face (21) du support (2) destinée à être revêtue de la sous-couche particulaire (3) et du décor (4).

4. Procédé selon l'une quelconque des revendications précédentes, dans lequel la résine fluorocarbonée de la composition particulaire, la résine fluorocarbonée de la première composition de décor et la résine fluorocarbonée de la composition de finition sont indépendamment choisies parmi le polytétrafluoroéthylène (PTFE), le copolymère de tétrafluoroéthylène et de perfluoro-propylvinyléther (PFA), le copolymère de tétrafluoroéthylène et d'hexafluoropropylène (FEP) et leurs mélanges.

5. Procédé selon l'une quelconque des revendications précédentes, dans lequel la composition particulaire comporte, outre la résine fluorocarbonée, une résine d'accrochage thermostable choisie parmi les polyamides imides (PAI), les polyéthers imides (PEI), les polyimides (PI), les polyéthercétones (PEK), les polyétheréthercétones (PEEK), les polyéthersulfures (PES), les sulfures de polyphénylène (PPS) et leurs mélanges.

6. Procédé selon l'une quelconque des revendications précédentes, dans lequel le séchage de l'étape c) est réalisé de manière forcée par rayonnement infrarouge ou par convection d'air chaud.

7. Procédé selon l'une quelconque des revendications précédentes, **caractérisé en ce que** le pigment à bonne tenue thermique de la composition de décor et le pigment à bonne tenue thermique de la sous-couche particulaire (3), sont indépendamment choisis parmi les pigments minéraux tels que le dioxyde de titane, les spinelles, les oxydes de fer, le titanate de nickel, le noir de carbone, les paillettes de mica, les paillettes métalliques ou les pigments organiques tels que les rouges de pérylène.

8. Procédé selon l'une quelconque des revendications précédentes, dans lequel l'étape d'impression d) d'un décor (4) comprend en outre :
d2) séchage naturel ou forcé de la première couche de décor (41) ; puis
d3) impression par flexographie d'une deuxième composition pigmentée de décor comportant un deuxième pigment à bonne tenue thermique pour former une deuxième couche de décor (42) discontinue, ladite deuxième couche de décor (42) étant disposée en superposition et/ou en juxtaposition de la première couche pigmentée (41).

9. Procédé selon l'une quelconque des revendications précédentes, **caractérisé en ce que** le traitement thermique de l'étape e) est une cuisson réalisée à une température comprise entre 380°C et 430°C.

10. Procédé selon l'une quelconque des revendications précédentes, dans lequel le support (2) se présente sous forme d'une préforme, ledit procédé comprenant en outre une étape f) de mise en forme de la préforme jusqu'à obtenir la forme de l'article souhaitée.

11. Procédé selon la revendication 10, dans lequel l'étape de mise en forme f) est réalisée postérieurement à l'étape e) de traitement thermique.

12. Procédé selon la revendication 10, dans lequel l'étape de mise en forme f) est réalisée avant l'étape d'application b), l'impression par flexographie de l'étape d) n'étant alors réalisée que sur la partie plane de la face (21).

13. Procédé selon l'une quelconque des revendications précédentes, comprenant en outre avant l'étape e) de traitement thermique :
• précuisson du support (2) revêtu de la sous-couche particulaire (3) et du décor (4), puis
• application d'un revêtement antiadhésif (7) sur la face (22) du support (2) opposée à celle (21) munie de la sous-couche particulaire (3) et du décor (4).

14. Procédé selon l'une quelconque des revendications 1 à 12, comprenant en outre entre les étapes de fourniture (a) du support (2) et d'application b) :
• application d'un revêtement antiadhésif (7) sur la face (22) du support (2) opposée à la face (21) destinée à être munie de la sous-couche particulaire (3) et du décor (4), puis
• précuisson du support (2) revêtu du revêtement antiadhésif (7).

15. Procédé selon l'une quelconque des revendications précédentes, dans lequel l'article (1) est un article culinaire comprenant un support métallique (2) présentant une face intérieure (22) pouvant recevoir des aliments et une face extérieure (21) destinée à être disposée vers la source de chaleur.

16. Procédé selon la revendication 15, dans lequel le support (2) est :
- une structure monocouche en aluminium anodisé ou non, ou en aluminium poli, brossé ou microbillé, sablé, traité chimiquement, ou en fonte d'aluminium, ou en acier inoxydable poli, brossé ou microbillé, ou en fonte, ou en cuivre martelé ou poli ; ou
- une structure multicouches, en partie ou en totalité, comprenant de l'extérieur vers l'intérieur les couches suivantes acier inoxydable/aluminium/acier inoxydable ou encore acier inoxydable/aluminium/cuivre/aluminium/acier inoxydable, ou encore une calotte d'aluminium de fonderie, d'aluminium ou d'alliages d'aluminium doublée d'un fond extérieur en acier inoxydable.

## Patentansprüche

1. Verfahren zur Dekoration eines Artikels (1), das die folgenden Schritte umfasst:
a) Bereitstellen eines Trägers (2), der zwei gegenüberliegende Seiten (21, 22) umfasst;
b) Aufbringen einer partikulären Zusammensetzung aus einer thermostabilen Beschichtung auf einer (21) der Seiten des Trägers (2), um eine partikulären Unterschicht (3) zu bilden, wobei die partikuläre Zusammensetzung mindestens ein Fluorkohlenstoffharz entweder allein oder mit einer thermostabilen Haftschicht umfasst,
c) eine natürliche oder erzwungene Trocknung der partikulären Unterschicht (3);
d) Flexodruck eines Dekors (4) auf der partikulären Unterschicht (3), das den Druck d1) einer ersten pigmentierten Dekorzusammensetzung auf der partikulären Unterschicht (3) umfasst, um eine erste diskontinuierliche Dekorschicht (41) zu bilden, wobei die erste Dekorzusammensetzung mindestens ein Pigment mit guter Temperaturbeständigkeit umfasst; danach
e) thermische Behandlung zur Verfestigung des beschichteten Trägers (2); in dem:
- die erste pigmentierte Dekorzusammensetzung ferner ein Fluorkohlenstoffharz aufweist, dessen Schmelz- oder Vernetzungstemperatur gleich oder kleiner als diejenige des Fluorkohlenstoffharzes ist, das in der partikulären Unterschicht (3) enthalten ist, und / oder
- ein Schritt zur Aufbringung einer farblosen Deckzusammensetzung, um eine farblose Deckschicht (5) zu bilden, in dem Flexodruckschritt d) und in dem Schritt zur thermischen Behandlung e) durchgeführt wird, wobei die farblose Deckzusammensetzung mindestens einen Fluorkohlenstoffharz aufweist, und oder
- die partikuläre Unterschicht (3) eine Unterschicht mit starker Absorption ist.

2. Verfahren nach Anspruch 1, wobei die partikuläre Zusammensetzung ferner mindestens einen Füllstoff mit guter Temperaturbeständigkeit und ein Pigment mit guter Temperaturbeständigkeit umfasst.

3. Verfahren nach einem der Ansprüche 1 und 2, das ferner vor dem Schritt der Aufbringung b) einen Schritt a') der Behandlung der Oberfläche der Seite (21) des Trägers (2) umfasst, der dazu bestimmt ist, mit der partikulären Unterschicht (3) und dem Dekor (4) beschichtet zu werden.

4. Verfahren nach einem der vorhergehenden Ansprüche, wobei das Fluorkohlenstoffharz der partikulären Zusammensetzung, das Fluorkohlenstoffharz der ersten Dekorzusammensetzung und das Fluorkohlenstoffharz der Deckzusammensetzung unabhängig aus Polytetrafluorethylen (PTFE), Copolymer von Tetrafluorethylen und von Perfluor-Propylvinylether (PFA), Copolymer von Tetrafluorethylen und Hexafluorpropylen (FEP) und ihren Mischungen ausgewählt ist.

5. Verfahren nach einem der vorhergehenden Ansprüche, wobei die partikuläre Zusammensetzung ferner ein Fluorkohlenstoffharz, ein thermostabiles Haftharz, das aus Polyamid-Imiden (PAI), Polyetherimiden (PEI), Polyimiden (PI), Polyetherketonen (PEK), Polyetheretherketonen (PEEK), Polyethersulfiden (PES), Polyphenylensulfiden (PPS) und ihren Mischungen ausgewählt ist.

6. Verfahren nach einem der vorhergehenden Ansprüche, wobei die Trocknung im Schritt c) auf erzwungene Weise durch eine Infrarotstrahlung oder einen Heißluftstrom durchgeführt wird.

7. Verfahren nach einem der vorhergehenden Ansprüche, **dadurch gekennzeichnet, dass** das Pigment mit guter Wärmebeständigkeit der Dekorzusammensetzung und das Pigment mit guter Wärmebeständigkeit der partikulären Unterschicht (3) unabhängig aus den mineralischen Pigmenten wie Titandioxid, Spinellen, Eisenoxid, Nickeltitanat, Ruß, Glimmerteilchen, metallischen Teilchen oder den organischen Pigmenten wie beispielsweise Perylenrottönen ausgewählt sind.

8. Verfahren nach einem der vorhergehenden Ansprüche, wobei der Schritt des Druckens d) eines Dekors (4) ferner umfasst:
d2) natürliche oder erzwungene Trocknung der ersten Schicht des Dekors (41); danach
d3) Flexodruck von mindestens einer zweiten pigmentierten Dekorzusammensetzung, die ein zweites Pigment mit einer guten Wärmebeständigkeit aufweist, um eine zweite diskontinuierliche Dekorschicht (42) zu bilden, wobei die zweite Dekorschicht (42) überlagert und / oder neben der ersten pigmentierten Schichtung (41) angeordnet ist.

9. Verfahren nach einem der vorhergehenden Ansprüche, **dadurch gekennzeichnet, dass** die Wärmebehandlung des Schritts e) ein Backen ist, das bei einer Temperatur zwischen 380 °C und 430 °C durchgeführt wird

10. Verfahren nach einem der vorhergehenden Ansprüche, wobei der Träger (2) in Form eines Vorformlings ausgebildet ist, und wobei das Verfahren ferner einen Schritt f) der Formgebung des Vorformlings umfasst, bis die Form des gewünschten Artikels erhalten wird.

11. Verfahren nach Anspruch 10, wobei der Schritt zur Formgebung f) vor dem Schritt zur thermischen Behandlung e) durchgeführt wird.

12. Verfahren nach Anspruch 10, wobei der Schritt der Formgebung f) vor dem Schritt der Aufbringung b) ausgeführt wird, wobei der Flexodruck des Schritts d) somit nur auf dem ebenen Abschnitt der Seite (21) durchgeführt wird.

13. Verfahren nach einem der vorhergehenden Ansprüche, das ferner vor dem Schritt e) zur thermischen Behandlung umfasst:
• ein Vorbacken des Trägers (2), der mit der partikulären Unterschicht (3) und dem Dekor (4) beschichtet ist, danach
• Aufbringung der Antihaftbeschichtung (7) auf die Seite (22) des Trägers (2) gegenüber derjenigen (21), die mit der partikulären Unterschicht (3) und dem Dekor (4) versehen ist.

14. Verfahren nach einem der Ansprüche 1 bis 12, das ferner zwischen den Schritten des Bereitstellens (a) des Trägers (2) und der Aufbringung b) umfasst:
• die Aufbringung einer Antihaftbeschichtung (7) auf der Seite (22) des Trägers (2) gegenüber der Seite (21), die dazu bestimmt ist, mit der partikulären Unterschicht (3) und dem Dekor (4) versehen zu werden, danach
• das Vorbacken des Trägers (2) der mit der Antihaftbeschichtung (7) beschichtet ist.

15. Verfahren nach einem der vorhergehenden Ansprüche, wobei der Artikel (1) ein kulinarischer Artikel ist, der einen Metallträger (2), der eine Innenseite (22) aufweist, die Lebensmittel aufnehmen kann, und eine Außenseite (21) umfasst, die dazu bestimmt ist, zu der Wärmequelle hin angeordnet zu sein.

16. Verfahren nach Anspruch 15, wobei der Träger (2) ist:
- eine Monoschichtstruktur aus anodisiertem oder nicht anodisiertem Aluminium, oder poliertem, gebürstetem oder glasperlengestrahltem, sandgestrahltem, chemisch behandeltem Aluminium oder aus gegossem Aluminium oder aus rostfreiem, poliertem, gebürstetem oder glasperlengestrahltem Stahl oder Gusseisen oder gehämmertem oder poliertem Kupfer; oder
- eine Mehrschichtstruktur, die ganz oder teilweise von außen nach innen die folgenden Schichten rostfreier Stahl / Aluminium / rostfreier Stahl oder auch rostfreier Stahl/ Aluminium / Kupfer / Aluminium / rostfreier Stahl oder eine Kappe aus gegossenem Aluminium, Aluminium oder Aluminiumlegierungen, das mit einer äußeren Schicht aus rostfreiem Stahl beschichtet ist, umfasst.

## Claims

1. Method for decorating an article (1) comprising the following steps:
a) supplying a support (2) comprising two opposite faces (21, 22);
b) applying a particulate thermostable coating composition onto one (21) of said support faces (2) to form a particulate sub-layer (3), said particulate composition comprising at least one fluorocarbonated resin, alone or with a thermostable fastening resin;
c) natural or forced drying of said particulate sub-layer (3);
d) flexographic printing of decor (4) on said particulate sub-layer (3), comprising the printing d1) of a first pigmented decor composition on said particulate sub-layer (3) to form a first discontinuous decor layer (41), said first decor composition comprising at least one pigment with good thermal resistance; then
e) thermal solidification treatment of the coated support (2);
wherein:
- the first pigmented decor composition additionally comprises a fluorocarbonated resin with a melting or curing temperature equal to or less than that of the fluorocarbonated resin contained in the particulate sub-layer (3), and/or
- a step of applying a colourless finishing composition to form a colourless finishing layer (5) is carried out between the flexographic printing step d) and the thermal treatment step e), said colourless finishing composition comprising at least one fluorocarbonated resin, and/or
- the particulate sub-layer (3) is a high-absorbing sub-layer.

2. Method according to claim 1, wherein the particulate composition additionally comprises at least one filler with good thermal resistance and a pigment with good thermal resistance.

3. Method according to any one of the claims 1 and 2, additionally comprising, prior to the application step b), a step a') of surface treatment of the face (21) of the support (2) intended to be coated from the particulate sub-layer (3) and the decor (4).

4. Method according to any one of the preceding claims, wherein the fluorocarbonated resin of the particulate composition, the fluorocarbonated resin of the first decor composition and the fluorocarbonated resin of the finishing composition are independently chosen from amongst polytetrafluoroethylene (PTFE), copolymers of tetrafluoroethylene and perfluoropropylvinylether (PFA), copolymers of tetrafluoroethylene and hexafluoropropylene (FEP) and their mixtures.

5. Method according to any one of the preceding claims, wherein the particulate composition comprises, further to the fluorocarbonated resin, a thermostable fastening resin chosen from amongst polyamide-imides (PAI), polyetherimides (PEI), polyimides (PI), polyether ketones (PEK), polyether ether ketones (PEEK), polyether sulphides (PES), polyphenylene sulphides (PPS) and their mixtures.

6. Method according to any one of the preceding claims, wherein the drying at step c) is carried out in a forced way, by infrared radiation or by hot air convection.

7. Method according to any one of the preceding claims, **characterised in that** the pigment with good thermal resistance of the decor and pigment composition with good thermal resistance of the particulate sub-layer (3), are independently chosen from amongst mineral pigments such as titanium dioxide, spinels, iron oxides, nickel titanate, black carbon, mica flakes, metal flakes or organic pigments such as perylene reds.

8. Method according to any one of the preceding claims, wherein the printing step d) of a decor (4) additionally comprises:
d2) natural or forced drying of the first decor layer (41); then
d3) flexographic printing of a second pigmented decor composition comprising a second pigment with good thermal resistance to form a second discontinuous decor layer (42), said second decor layer (42) being positioned stacked and/or juxtaposed to the first pigmented layer (41).

9. Method according to any one of the preceding claims, **characterised in that** the thermal treatment of step e) is a cooking process carried out at a temperature comprised from 380°C to 430°C.

10. Method according to any one of the preceding claims, wherein the support (2) is presented in the form of a preform, said method additionally comprising a step f) of shaping the preform until the desired article shape is achieved.

11. Method according to claim 10, wherein the forming step f) is carried out after the thermal treatment of step e).

12. Method according to claim 10, wherein the forming step f) is carried out before application step b), the flexographic printing of step d) only thus being carried out on the flat part of the face (21).

13. Method according to any one of the preceding claims, additionally comprising before the thermal treatment of step e):
- pre-cooking of the support (2) coated by the particulate sub-layer (3) and of the decor (4), then
- applying a non-stick coating (7) on the face (22) of the support (2) opposite to the face (21) equipped with the particulate sub-layer (3) and the decor (4).

14. Method according to any one of the claims 1 to 12, additionally comprising between the support (2) supply a) and application b) steps:
- applying a non-stick coating (7) on the face (22) of the support (2) opposite to the face (21) intended to be equipped with the particulate sub-layer (3) and the decor (4), then
- pre-cooking of the support (2) coated by the non-stick coating (7).

15. Method according to any one of the preceding claims, wherein the article (1) is a culinary article comprising a metal support (2) presenting an interior face (22) which is able to receive food and an exterior face (21) intended to be positioned towards the heat source.

16. Method according to claim 15, wherein the support (2) is:
- a single-layer structure made of anodised (or not) aluminium, or of polished, brushed or micro-beaded, sand-blasted, chemically treated aluminium, or of cast aluminium, or of polished, brushed or micro-beaded stainless steel, or of cast-iron, or of hammered or polished copper structure; or
- a multi-layer structure, in whole or in part, comprising from the exterior to the interior, subsequent layers of stainless steel/aluminium/stainless steel or stainless steel/aluminium/copper/aluminium/stainless steel, or a cast aluminium cap, aluminium cap, or aluminium alloy cap, lined with an exterior, stainless steel base.
